Europäisches Patentamt

European Patent Office

Office européen des brevets

(11) Veröffentlichungsnummer: **0 427 067 A2**

# EUROPÄISCHE PATENTANMELDUNG

(21) Anmeldenummer: 90120603.7

(22) Anmeldetag: 26.10.90

(51) Int. Cl.⁵: **G06F 9/46**

(30) Priorität: 08.11.89 DE 3937202

(43) Veröffentlichungstag der Anmeldung:
**15.05.91 Patentblatt 91/20**

(84) Benannte Vertragsstaaten:
**AT BE CH DE ES FR GB GR IT LI LU NL SE**

(71) Anmelder: **Siemens Aktiengesellschaft**
**Wittelsbacherplatz 2**
**W-8000 München 2(DE)**

(72) Erfinder: **Mildner, Wolfgang, Dipl.-Ing.**
**Lettenfeld 2**
**W-8521 Effeltrich(DE)**
Erfinder: **Shepherd, Tim**
**Asenhagen 28D**
**N-2000 Suedsmokorset(NO)**

(54) **Verfahren zum alternierenden Betrieb eines Rechners mit mehreren Betriebssystemen.**

(57) Verfahren zum alternierenden Betrieb eines Rechners mit mehreren Betriebssystemen, insbesondere einem Multi-tasking-Betriebssystem (MT) und einem Single-tasking-Betriebssystem (ST), bei dem
a) im Arbeitsspeicher (6) des Rechners (1) permanent die Betriebssysteme (MT,ST) gehalten werden und
b) der Rechner (1) zyklisch und/oder zustandsabhängig zwischen den Betriebssystemen (MT,ST) umschaltet.

FIG 2

## VERFAHREN ZUM ALTERNIERENDEN BETRIEB EINES RECHNERS MIT MEHREREN BETRIEBSSYSTEMEN

Zum Beobachten, Protokollieren und Steuern von Prozessen werden wegen der parallelen Aufgaben häufig sogenannte Multi-tasking-Betriebssysteme (z.B. iRMX 2 der Firma Intel) benutzt. Es besteht gelegentlich der Wunsch, Auswertungen oder dergleichen vorzunehmen, für die aber die auf das genannte Betriebssystem zugeschnittene Software fehlt. Auf der anderen Seite gibt es jedoch zahlreiche Auswerteprogramme, insbesondere in der PC-Welt unter dem MS-DOS-Betriebssystem (MS-DOS ist ein Warenzeichen der Firma Microsoft).

Bisher schließt sich die Verwendung eines Single-tasking Betriebssystems mit einem Multitasking-Betriebssystem aus; es wäre allenfalls möglich, die Betriebssysteme umzuladen. Dies führt jedoch dazu, daß z.B. das weiterlaufende Beobachten und Protokollieren der Prozesse nicht mehr möglich ist und daher nur geschehen kann, wenn eine Anlage z.B. stillsteht. Häufig ist jedoch gefordert, daß Anlagen im Dauerbetrieb arbeiten. Hier ist eine derartige Umladung nicht möglich.

Die Aufgabe der vorliegenden Erfindung besteht darin, ein Verfahren anzugeben, bei dem während des Multi-tasking-Betriebes einem Benutzer gleichzeitig auch ein Single-tasking-Betriebssystem so zur Verfügung gestellt werden kann, daß sich kaum merkbare Verlangsamungen in beiden Betriebssystemarten hinsichtlich zu lösender Aufgaben ergeben.

Die Aufgabe wird erfindungsgemäß dadurch gelöst, daß

a) im Arbeitsspeicher des Rechners permanent die Betriebssysteme gehalten werden und

b) der Rechner zyklisch und/oder zustandsabhängig zwischen den Betriebssystemen umschaltet.

Mit Vorteil erfolgt das Umschalten durch ein Kontrollprogramm, erfolgt, das permanent im Arbeitsspeicher gehalten wird. Dadurch ist es möglich, ohne größere Änderungen der Betriebssysteme Anpassungen, z.B. bei Hardwareänderungen, vorzunehmen.

Da das Kontrollprogramm von beiden Betriebssystemen aus aufrufbar sein muß, sollte das Kontrollprogramm auf die den Betriebssystemen zugewiesenen Speicherbereiche verteilt sein.

Um eine ordnungsgemäße Datenverarbeitung zu gewährleisten, wird vor dem Umschalten der Rechnerzustand abgefragt und bei vorliegen bestimmter Rechnerzustände, z.B. bei Pheripheriezugriffen, das Umschalten unterbunden.

Wenn mindestens ein Prozessor des Rechners beim Umschalten seine Betriebsart, insbesondere seinen Adressierungsmodus, ändert, wird vermieden, das der Rechner im einen Betriebssystem versehentlich auf Speicherbereiche zugreift, die dem anderen Betriebssystem zugewiesen sind.

Um ein besonders schnelles Umschalten gewährleisten zu können, ist es von Vorteil, wenn vor dem Verlassen eines Betriebssystems die zum ordnungsgemäßen Weiterarbeiten in diesem Betriebssystem nötigen Informationen, z.B. der Prozessorstatus, in einem vorgegebenen Speicherbereich hinterlegt werden und vor der Fortsetzung des anderen Betriebssystems die zum ordnungsgemäßen Weiterarbeiten in diesem Betriebssystem benötigten Informationen aus einem vorgegebenen Speicherbereich abgerufen werden.

Wenn das eine Betriebssystem niederrangigere Aufgaben bearbeitet als das andere Betriebssystem, sollte in das eine Betriebssystem nur dann geschaltet werden, wenn das andere Betriebssystem im Leerlauf arbeitet.

Um wichtige und/oder zeitkritische Aufgaben sicher bearbeiten zu können, sollte das Umschalten durch Tastatureingaben auslösbar und/oder sperrbar sein.

Weitere Vorteile und Einzelheiten ergeben sich aus der nachfolgenden Beschreibung eines Ausführungsbeispiels, anhand der Zeichnungen und in Verbindung mit den weiteren Unteransprüchen. Es zeigen:

FIG 1 das Prinzipschaltbild einer Rechneranlage,

FIG 2 die Speicheraufteilung,

FIG 3 und FIG 4 Blockschaltbilder zum Erläutern des Umschaltvorgangs.

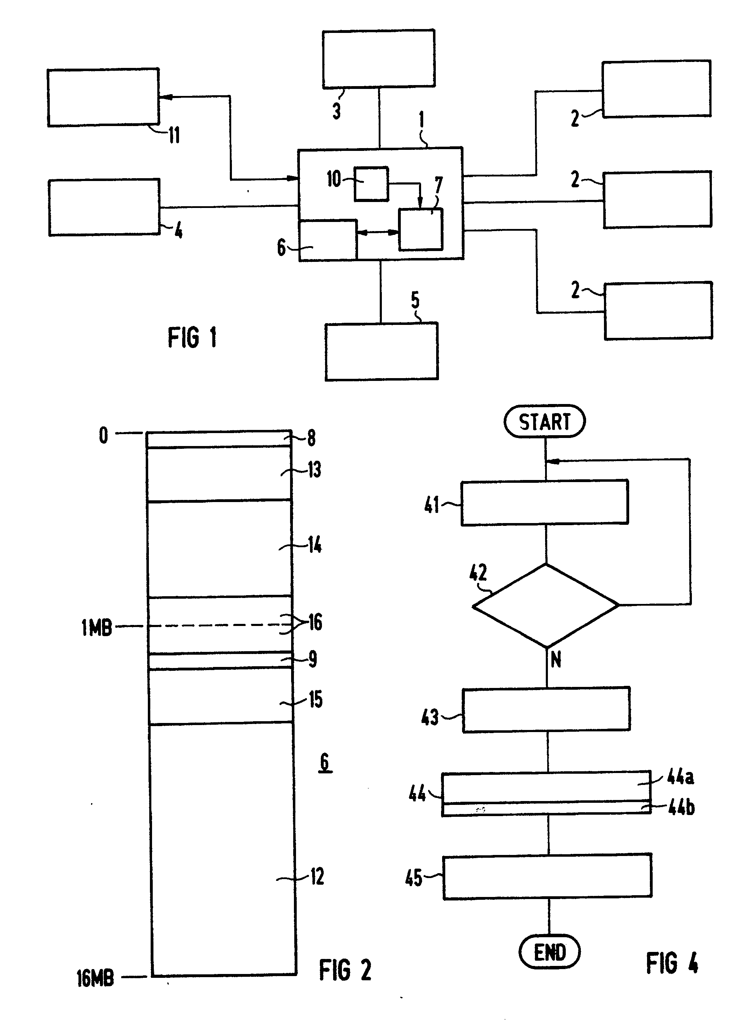

Gemäß FIG 1 werden von einem Rechner 1 aus mehrere Peripheriegeräte 2, z.B. Werkzeugmaschinen, überwacht und deren Meldevorgänge protokolliert und ausgedruckt. Hierzu ist dem Rechner ein Drucker 3 und eine Anzeige 4 zugeordnet. Zur Kommunikation des Benutzers mit dem Rechner 1 dient ein Terminal 5. Das Terminal 5 umfaßt einen nicht dargestellten Monitor und eine ebenfalls nicht dargestellte Tastatur. Ein derartiges Überwachungssystem wird beispielsweise von der Firma Siemens unter dem Namen COROS vertrieben.

Der Rechner 1 weist intern u.a. einen Arbeitsspeicher 6 und einen Hauptprozessor 7, z.B. einen Intel 80286/80386 auf, dem ein Steuerprozessor 10 vorgeschaltet ist. Der Rechner 1 ist weiterhin mit Massenspeichern 11 verbunden, z.B. Festplatten oder Floppy-Disks.

FIG 2 zeigt die Aufteilung des im Rechner 1 hardwaremäßig vorhandenen Speichers 6. Beim Einschalten des Rechners 1 wird der Rechner zunächst hochgefahren (gebootet), wobei das Single-tasking-Betriebssystem ST, z.B. MS-DOS, in den Speicherbereich 13 geladen wird. Durch ein vom Benutzer einzugebendes Kommando wird das Kommunikationsprogramm KP in den Speicherbereich 16 ge laden. Durch ein weiteres, ebenfalls vom Benutzer einzugebendes Kommando wird das Multi-tasking-Betriebssystem MT, z.B. das Betriebssystem iRMX, in den Speicherbereich 15 geladen. Die Betriebssysteme ST, MT sowie das Kontrollprogramm KP werden dabei permanent im Speicher 6 gehalten.

Das Betriebssystem ST kann nur Programme ausführen, die im Speicherbereich zwischen Null und einem Megabyte (1 MB) abgespeichert sind. Das Betriebssystem MT darf Programme ausführen, die im Speicherbereich von einem bis 16 Megabyte (16 MB) abgespeichert sind. Folglich verbleiben für das Betriebssystem ST bzw. MT die Speicherbereiche 14 bzw. 12 für Benutzerprogramme. Der Zugriff auf Daten ist bei beiden Betriebssystemen ST, MT nicht beschränkt. Die gestrichelte Linie in FIG 2 deutet die Grenze zwischen den den Betriebssystemen ST und MT zugeordneten Speicherbereichen an.

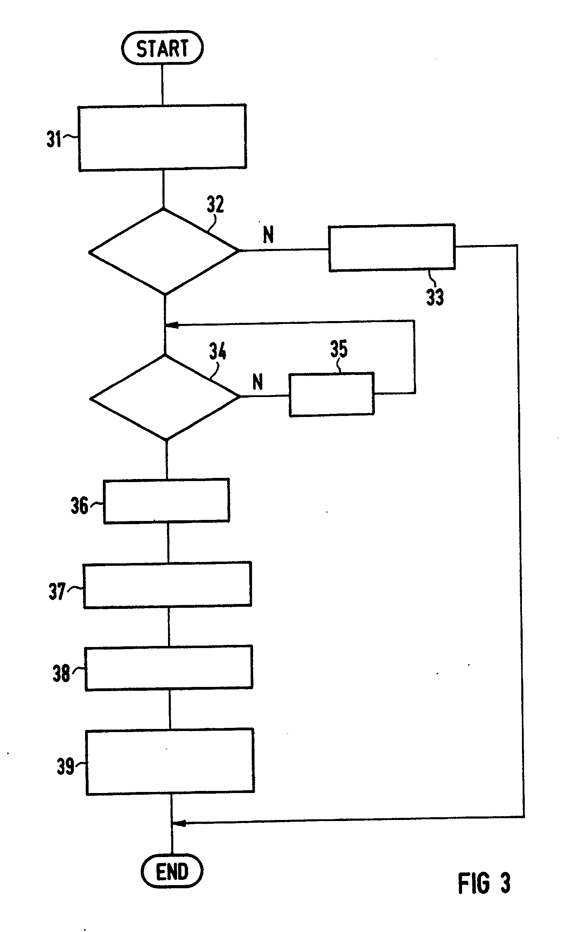

FIG 3 zeigt, wie vom Single-tasking-Betriebssystem ST in das Multi-tasking-Betriebssystem MT umgeschaltet wird. Der gesamte in FIG 3 dargestellte Verfahrensablauf ist Teil des Kontrollprogramms KP.

Zunächst werden vom Funktionsbaustein 31 alle Interrupts abgefangen. Interrupts können z.B. Zeitablauf, also zyklisches Umschalten, Tastatureingaben oder auch Anforderungen des Prozessors 10 durch eines der Peripheriegeräte 2 sein. Im Funktionsbaustein 32 wird sodann geprüft, ob zur Behandlung der Interrupts ein Umschalten des Betriebssystems erforderlich ist. Wenn nicht, wird durch den Funktionsbaustein 33 der Interrupt im Betriebssystem ST an den Prozessor 7 weitergeleitet und das Kontrollprogramm KP verlassen. Der Prozessor 7 arbeitet dann den Interrupt ab ohne das Betriebssystem ST zu verlassen.

Wenn in das Betriebssystem MT umgeschaltet werden muß, wird im Funktionsbaustein 34 abgefragt, ob ein Umschalten der Betriebssysteme zulässig ist. Wenn der Rechner 1 beispielsweise gerade auf externe Speicher, z.B. auf die Festplatte 11 zugreift, ist ein Umschalten unzulässig. In diesem Fall wird die Warteschleife 35 durchlaufen und dann erneut der Funktionsbaustein 34. Wenn das Umschalten der Betriebssysteme zulässig ist, wird der momentane Status des Prozessors 7 sowie weitere, zum ordnungsgemäßen Fortsetzen im Betriebssystem ST benötigte Daten, z.B. die Speicherkonfiguration des Speichers 6 und welche Teile davon besetzt sind, im Speicherbereich 8 abgespeichert. Danach wird vom Funktionsbaustein 37 der Adressierungsmodus des Prozessors 7 umgeschaltet, und zwar von reeller Adressierung RM auf virtuelle Adressierung VM. Nach dem Umschalten des Adressierungsmodus ist der Prozessor 7 in der Lage, auf Programme im Speicherbereich von einem bis 16 Megabyte zuzugreifen. Vom Funktionsbaustein 38 werden die zur Fortsetzung im Betriebssystem MT benötigten Daten aus dem Speicherbereich 9 gelesen und zum Teil in den Prozessor 10 geladen. Sodann wird vom Funktionsbaustein 39 die Kontrolle an das Multi-tasking-Betriebssystem MT übergeben.

FIG 4 zeigt, wie das Umschalten vom Multitasking-Betriebssystem MT zum Single-tasking-Betriebssystem ST vonstatten geht. Dabei sind nur die Funktionsbausteine 43 bis 45 Bestandteil des Kontrollprogramms KP.

Der Funktionsbaustein 41 führt das bereits bei FIG 3 beschriebene Interrupt-handling sowie alle anderen, im Betriebssystem MT anfallenden Aufgaben durch. Im Funktionsbaustein 42 wird immer wieder abgefragt, ob noch weitere Aufgaben im Betriebssystem MT anstehen. Wenn ja, wird erneut der Baustein 41 durchlaufen. Nur wenn momentan im Betriebssystem MT keine Aufgaben zu erledigen sind, das Betriebssystem MT also im Leerlauf (Nullprozeß) arbeiten würde, wird in das Betriebssystem ST umgeschaltet.

Zum Umschalten wird zunächst vom Funktionsbaustein 43, wie zuvor bereits vom Funktionsbaustein 36, die zum Fortsetzen des Betriebssystems MT benötigten Informationen im Speicherbereich 9 abgelegt. Sodann wird dann vom Funktionsbaustein 44, genauer von dessen Teil 44a, ein Befehl an den Prozessor 10 gegeben, aufgrund dessen der Prozessor 10 dem Prozessor 7 ein Reset-Signal übermittelt. Durch den Reset wird der Prozessor 7 zurück in den Adressierungsmodus RM geschaltet und neu initialisiert. Beim Initialisieren werden u.a. die im Speicherbereich 8 abgespeicherten Daten vom Funktionsbaustein 44b, der Teil der Initialisierungsroutine des Prozessors 7 ist, abgerufen, so daß der Prozessor 7 im Betriebssystem ST ordnungsgemäß weiterarbeiten kann, nachdem die Kontrolle vom Funktionsbaustein 45 an das Betriebssystem ST weitergegeben wurde.

Das Initialisieren des Prozessors 7 ist deswegen nötig, weil der Prozessor 7 ein Umschalten von virtueller Adressierung VM zu reeller Adressierung RM nicht zuläßt. Wegen der unterschiedlichen Adressierungsarten kann der Prozessor 10 bei virtueller Adressierung VM auf Programme im Speicherbereich bis 16 Megabyte zugreifen, im Modus RM nur bis 1 Megabyte.

Abschließend sei noch erwähnt, daß das Umschalten zwischen den Betriebssystemen ST, MT, das vom Benutzer verdeckt erfolgt, zur Durchführung wichtiger und/oder zeitkritischer Aufgaben auslösbar und/oder sperrbar sein kann. Es ist beispielsweise möglich, durch Drücken einer Taste am Terminal 6 das Verharren des Rechners 1 im Betriebssystem ST zu erzwingen.

**Ansprüche**

1. Verfahren zum alternierenden Betrieb eines Rechners mit mehreren Betriebssystemen, insbesondere einem Multi-tasking-Betriebssystem (MT) und einem Single-tasking-Betriebssystem (ST), bei dem

a) im Arbeitsspeicher (6) des Rechners (1) permanent die Betriebssysteme (MT,ST) gehalten werden und

b) der Rechner (1) zyklisch und/oder zustandsabhängig zwischen den Betriebssystemen (MT,ST) umschaltet.

2. Verfahren nach Anspruch 1, **dadurch gekennzeichnet,** daß das Umschalten durch ein Kontrollprogramm (KP) erfolgt, das permanent im Arbeitsspeicher (6) gehalten wird.

3. Verfahren nach Anspruch 2, **dadurch gekennzeichnet,** daß das Kontrollprogramm (KP) auf die den Betriebssystemen (MT,ST) zugewiesenen Speicherbereiche verteilt ist.

4. Verfahren nach Anspruch 1, 2 oder 3, **dadurch gekennzeichnet,** daß vor dem Umschalten der Rechnerzustand abgefragt wird und bei Vorliegen bestimmter Rechnerzustände, z.B. bei Peripheriezugriffen, das Umschalten unterbunden wird.

5. Verfahren nach Anspruch 1, 2, 3 oder 4, **dadurch gekennzeichnet,** daß mindestens ein Prozessor (7) des Rechners (1) beim Umschalten seine Betriebsart (RM,VM), insbesondere seinen Adressierungsmodus (RM,VM), ändert.

6. Verfahren nach einem oder mehreren der obigen Ansprüche, **dadurch gekennzeichnet,** daß zum Umschalten des Rechners (1) der Prozessor (7) zurückgesetzt (Reset) wird.

7. Verfahren nach einem oder mehreren der obigen Ansprüche, **dadurch gekennzeichnet,** daß vor dem Verlassen eines Betriebssystems (ST) die zum ordnungsgemäßen Weiterarbeiten in diesem Betriebssystem (ST) nötigen Informationen, z.B. der Prozessorstatus, in einem vorgegebenen Speicherbereich (8) hinterlegt werden und vor der Fortsetzung des anderen Betriebssystems (MT) die zum ordnungsgemäßen Weiterarbeiten in diesem Betriebssystem (MT) benötigten Informationen aus einem vorgegebenen Speicherbereich (9) abgerufen werden.

8. Verfahren nach einem oder mehreren der obigen Ansprüche, **dadurch gekennnzeichnet,** daß in das eine Betriebssystem (ST) nur dann umgeschaltet wird, wenn das andere Betriebssystem (MT) im Leerlauf (Nullprozeß) arbeitet.

9. Verfahren nach einem oder mehreren der obigen Ansprüche, **dadurch gekennzeichnet,** daß das Umschalten durch Tastatureingaben auslösbar und/oder sperrbar ist.

10. Verfahren nach einem oder mehreren der obigen Ansprüche, **dadurch gekennzeichnet,** daß das Umschalten vom Benutzer verdeckt erfolgt.

EP 0 427 067 A2

FIG 1

FIG 2

FIG 4

5

FIG 3